# EUROPEAN PATENT APPLICATION

(11) **EP 4 391 481 A1**
(43) Date of publication of application: **26.06.2024**
(21) Application number: 22857585.8
(22) Date of filing: 02.08.2022
(51) Int. Cl.: H04L 45/30

(54) **MESSAGE SENDING METHOD AND APPARATUS, AND STORAGE MEDIUM**

(30) Priority: 19.08.2021 CN 202110953970
(71) Applicant: China Mobile Communication Co., Ltd Research Institute, Beijing 100053 (CN); CHINA MOBILE COMMUNICATIONS GROUP CO., LTD., Beijing 100032 (CN)
(72) Inventor: CHENG, Weiqiang, Beijing 100053 (CN); YANG, Xue, Beijing 100053 (CN); JIANG, Wenying, Beijing 100053 (CN); LIU, Yisong, Beijing 100053 (CN); GONG, Liyan, Beijing 100053 (CN)
(74) Representative: Gunzelmann, Rainer
(86) International application number: PCT/CN2022/109673
(87) International publication number: WO 2023/020273

(57) **Abstract**

A packet sending method and apparatus, and storage medium are provided. The method includes: receiving a packet, where the packet is to be examined or processed by any node along a packet delivery path; enabling an identifier to be carried in a packet extension header, where the identifier indicates that information carried in the packet is processed in a control plane or a forwarding plane; sending the packet. The present disclosure supports, on basis of supporting the existing hop-by-hop processing function, ability to process packet information hop-by-hop in a forwarding plane. This function can meet needs of slicing and in-situ flow information telemetry. The present disclosure may effectively identify illegal packets forged by hackers and effectively prevent an identifier from being tampered with or used by hackers to attack network nodes.

## Description

### CROSS-REFERENCE TO RELATED APPLICATION

This application claims priority to the Chinese patent application No. 202110953970.3 filed in China on August 19, 2021, a disclosure of which is incorporated herein by reference in its entirety.

### TECHNICAL FIELD

The present disclosure relates to the field of communication technology, in particular, relates to a packet sending method, a packet sending apparatus, and a storage medium.

### BACKGROUND

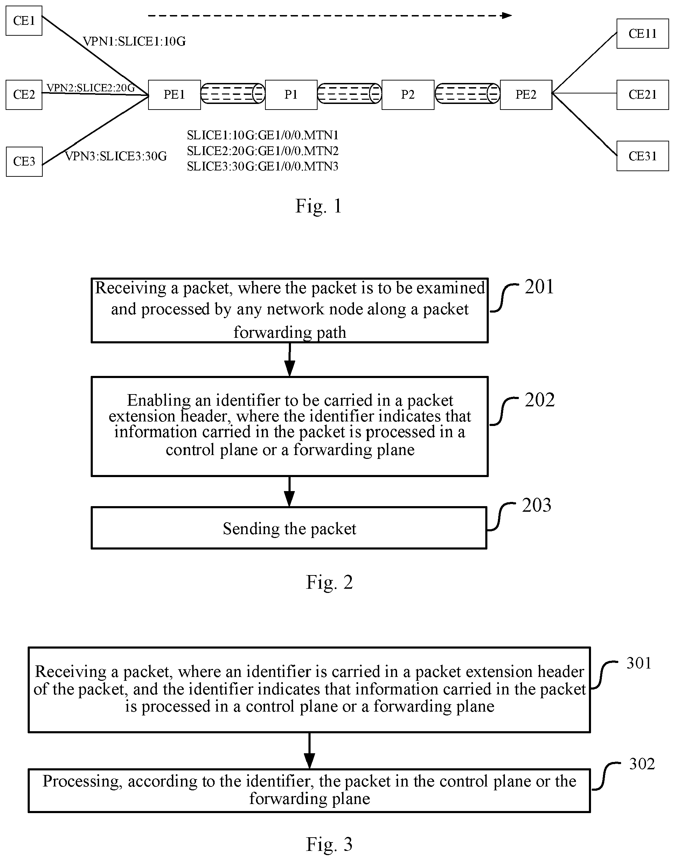

With the emergence of new technologies such as slicing and in-situ flow information telemetry, network devices need to perform hop-by-hop detection and processing of certain information. Fig. 1 is a schematic diagram of slice forwarding. Taking slicing as an example, as shown in the figure, a packet needs to carry slice ID (identifier) information for network nodes in a delivery path to match corresponding link resources based on the slice ID information, in combination with the related hard slicing technology, ultimately achieving end-to-end network slicing functionality.

The deficiency of the related art is that there is no scheme to determine how to carry related information in slicing and in-situ flow information telemetry technologies.

### SUMMARY

The technical solution of embodiments of the present disclosure provides a packet sending method, a packet sending method apparatus, and a storage medium, to solve the problem in technologies of slicing and in-situ flow information telemetry that there is no scheme to determine how to carry related information.

A packet sending method is provided. The method includes:
receiving a packet, wherein the packet is to be examined or processed by any node along a packet delivery path;
enabling an identifier to be carried in a packet extension header of the packet, wherein the identifier indicates that the packet is processed in a control plane or a forwarding plane;
sending the packet.

In some embodiments, the packet is an Internet Protocol version 6 (IPv6) packet.

In some embodiments, the packet extension header is an IPv6 packet extension header Hop-by-Hop Options Header.

In some embodiments, the method further includes: enabling a CheckSum to be carried in the packet extension header.

In some embodiments, the method further includes: enabling a CheckSumId to be carried in the packet extension header, the CheckSumId indicating an algorithm used by the CheckSum.

In some embodiments, the method further includes: updating the algorithm of the CheckSum at a preset time.

A packet sending method is provided. The method includes:
receiving a packet, wherein the packet carries an identifier in a packet extension header of the packet, and the identifier indicates that information carried in the packet is processed in a control plane or a forwarding plane;
processing, according to the identifier, the packet in the control plane or the forwarding plane.

In some embodiments, the packet is an IPv6 packet.

In some embodiments, the packet extension header is an IPv6 packet extension header Hop-by-Hop Options Header.

In some embodiments, the method further includes: enabling a first CheckSum to be carried in the packet extension header.

In some embodiments, the method further includes: enabling a CheckSumId to be carried in the packet extension header, the CheckSumId indicating an algorithm used by the CheckSum.

In some embodiments, the method further includes: comparing, with the first CheckSum carried in the packet, a second CheckSum calculated according to the algorithm indicated by the CheckSumId, to determine whether the packet is a legal packet.

In some embodiments, the method further includes: if calculation content of the CheckSum includes a variable part, then after updating the variable part, recalculating a third CheckSum according to a CheckSum calculation method indicated by the CheckSumId, and updating the first CheckSum in the packet with the third CheckSum.

In some embodiments, the method further includes: updating the algorithm of the CheckSum at a preset time.

A first network node is provided. The first network node includes:
a processor, configured to read a program in a storage and perform following processes:
receiving a packet, wherein the packet is to be examined or processed by any node along a packet delivery path;
enabling an identifier to be carried in a packet extension header of the packet, wherein the identifier indicates that information carried in the packet is processed in a control plane or a forwarding plane;
sending the packet;
a transceiver, configured to receive and send data under the control of the processor.

In some embodiments, the packet is an Internet Protocol version 6 (IPv6) packet.

In some embodiments, the packet extension header is an IPv6 packet extension header Hop-by-Hop Options Header.

In some embodiments, the processor is further configured to read a program in a storage and perform: enabling a CheckSum to be carried in the packet extension header.

In some embodiments, the processor is further configured to read a program in a storage and perform: enabling a CheckSumId to be carried in the packet extension header, the CheckSumId indicating an algorithm used by the CheckSum.

In some embodiments, the processor is further configured to read a program in a storage and perform: updating the algorithm of the CheckSum at a preset time.

A first network node is provided. The first network node includes:
a first node receiving module, configured to receive a packet, wherein the packet is to be examined or processed by any node along a packet delivery path;
a first node identifying module, configured to enable an identifier to be carried in a packet extension header of the packet, wherein the identifier indicates that information carried in the packet is processed in a control plane or a forwarding plane;
a first node sending module, configured to send the packet.

In some embodiments, the packet is an Internet Protocol version 6 (IPv6) packet.

In some embodiments, the packet extension header is an IPv6 packet extension header Hop-by-Hop Options Header.

In some embodiments, the first node identifying module is further configured to enable a CheckSum to be carried in the packet extension header.

In some embodiments, the first node identifying module is further configured to enable a CheckSumId to be carried in the packet extension header, the CheckSumId indicating an algorithm used by the CheckSum.

In some embodiments, the first node identifying module is further configured to update the algorithm of the CheckSum at a preset time.

A second network node is provided. The node includes:
a processor, configured to read a program in a storage and perform following processes:
receiving a packet, wherein the packet carries an identifier in a packet extension header of the packet, and the identifier indicates that information carried in the packet is processed in a control plane or a forwarding plane;
processing, according to the identifier, the packet in the control plane or the forwarding plane;
a transceiver, configured to receive and send data under the control of the processor.

In some embodiments, the packet is an IPv6 packet.

In some embodiments, the packet extension header is an IPv6 packet extension header Hop-by-Hop Options Header.

In some embodiments, the processor is configured to read a program in a storage and perform: enabling a first CheckSum to be carried in the packet extension header.

In some embodiments, the processor is configured to read a program in a storage and perform: enabling a CheckSumId to be carried in the packet extension header, the CheckSumId indicating an algorithm used by the CheckSum.

In some embodiments, the processor is configured to read a program in a storage and perform: comparing, with the first CheckSum carried in the packet, a second CheckSum calculated according to the algorithm indicated by the CheckSumId, to determine whether the packet is a legal packet.

In some embodiments, the processor is configured to read a program in a storage and perform: if calculation content of the CheckSum includes a variable part, then after updating the variable part, recalculating a third CheckSum according to a CheckSum calculation method indicated by the CheckSumId, and updating the first CheckSum in the packet with the third CheckSum.

In some embodiments, the processor is configured to read a program in a storage and perform: updating the algorithm of the CheckSum at a preset time.

A second network node is provided. The node includes:
a second node receiving module, configured to receive a packet, wherein the packet carries an identifier in a packet extension header of the packet, and the identifier indicates that information carried in the packet is processed in a control plane or a forwarding plane;
a second node sending module, configured to process, according to the identifier, the packet in the control plane or the forwarding plane.

In some embodiments, the packet is an IPv6 packet.

In some embodiments, the packet extension header is an IPv6 packet extension header Hop-by-Hop Options Header.

In some embodiments, the processor is configured to read a program in a storage and perform: enabling a first CheckSum to be carried in the packet extension header.

In some embodiments, the second node receiving module is further configured to enable a CheckSumId to be carried in the packet extension header, the CheckSumId indicating an algorithm used by the CheckSum.

In some embodiments, the second node receiving module is further configured to compare, with the first CheckSum carried in the packet, a second CheckSum calculated according to the algorithm indicated by the CheckSumId, to determine whether the packet is a legal packet.

In some embodiments, the second node receiving module is further configured to if calculation content of the CheckSum includes a variable part, then after updating the variable part, recalculate a third CheckSum according to a CheckSum calculation method indicated by the CheckSumId, and update the first CheckSum in the packet with the third CheckSum.

In some embodiments, the second node receiving module is further configured to update the algorithm of the CheckSum at a preset time.

A computer-readable storage medium is provided, wherein the computer-readable storage medium stores a computer program, the computer program being used for executing the packet sending method.

The beneficial effects of the present disclosure are as follows.

In the technical solutions provided in the embodiments of the present disclosure, an identifier is carried in a packet extension header, where the identifier is used for indicating that information carried in the packet is processed in a control plane or a forwarding plane. Since network nodes in the delivery path must examine or process the information carried in the extension header and decides whether to process the information carried in the extension header in the control plane or the forwarding plane according to the identifier. Therefore, on the basis of supporting the existing hop-by-hop processing function, the ability to process the packet information hop-by-hop in the forwarding plane can also be supported. This function is more capable of meeting the needs of new technologies such as slicing and in-situ flow information telemetry.

Furthermore, a CheckSum calculation scheme is proposed. On the one hand, the integrity of the packet can be verified, identifying whether the content has changed during forwarding. On the other hand, the legality of the identity of the packet sender can be verified. The flexible and variable CheckSum calculation method, while enabling the existing CheckSum to ensure the integrity of the packet, also supports the verification of the legality of the identity of the packet sender. The CheckSum calculation method can effectively identify illegal packets forged by hackers and effectively prevent the identifier from being tampered with or used by hackers to attack network nodes.

### BRIEF DESCRIPTION OF THE DRAWINGS

The drawings illustrated herein are intended to provide further understanding of the present disclosure, and form a part of the present disclosure. The exemplary embodiments of the present disclosure and illustrations of the embodiments are intended to explain the present disclosure, and do not form improper limits to the present disclosure. In the drawings:
Fig. 1 is a schematic diagram of slice forwarding in the related art;
Fig. 2 is a schematic implementation flowchart of a packet sending method according to an embodiment of the present disclosure;
Fig. 3 is another schematic implementation flowchart of a packet sending method according to an embodiment of the present disclosure;
Fig. 4 is a schematic diagram of a bit jump process during a packet forwarding process according to an embodiment of the present disclosure;
Fig. 5 is a schematic diagram of a process that an illegal network device sends a large number of forged identifiers to attack a network device according to an embodiment of the present disclosure;
Fig. 6 is a schematic diagram of a Hop-by-Hop Options Header packet format according to an embodiment of the present disclosure;
Fig. 7 is a schematic implementation diagram of processing an IPv6 packet according to an embodiment of the present disclosure;
Fig. 8 is a schematic structural diagram of a first network node according to an embodiment of the present disclosure;
Fig. 9 is a schematic structural diagram of a second network node according to an embodiment of the present disclosure.

### DETAILED DESCRIPTION

During the invention process, the inventors notice:
the information carried in the IPv6 (Internet Protocol Version 6) extension header Hop-by-Hop Options Header (Hop-by-Hop refers to that the data packet passes through routers hop-by-hop) in the existing scheme must be examined or processed by the network nodes in the packet delivery path. If information of slice and in-situ flow information telemetry are carried through this extension header, the nodes in the delivery path will examine or process the carried information.
Since slicing and in-situ flow information telemetry are new technologies and are not yet mature, there is currently no scheme to determine how to carry related information. However, carrying the related information through the IPv6 Hop-by-Hop Options Header is one of the methods most likely to be used currently.
However, at least one of the following technical problems exists when the Hop-by-Hop Options Header carries slicing and in-situ flow information telemetry.

Currently, when a network node receives the Hop-by-Hop Options Header, the packet is processed in the control plane. When the service packet carries slice information, and if all of the large number of packets are processed in the control plane, the control plane may be subject to too much pressure, and the device cannot handle the large number of packets, which may cause the device to be paralyzed. In addition, there is requirement for a forwarding delay of the service packet. If all hop-by-hop nodes processes the packets at the main control board, the forwarding delay of the packet will be undoubtedly seriously affected. Therefore, it is basically infeasible to carry information of slicing and in-situ flow information telemetry through the existing Hop-by-Hop Options Header.

In addition, some schemes mention the current situation of the Hop-by-Hop Options Header:
some nodes are configured to ignore the Hop-by-Hop Options Header extension header;
some nodes are configured to discard packets carrying the Hop-by-Hop Options Header;
some nodes may be configured to limit the speed of packets carrying the Hop-by-Hop Options Header, or put them in the slow queue for processing.

The specific content is as follows: New hop-by-hop options are not recommended because nodes may be configured to ignore the Hop-by-Hop Options header, drop packets containing a Hop-by-Hop Options header, or assign packets containing a Hop-by-Hop Options header to a slow processing path.

In summary, the existing Hop-by-Hop Options Header is not suitable for carrying information of slicing and in-situ flow information telemetry due to the above problems. New technologies such as slicing and in-situ flow information telemetry urgently need a scheme where nodes in the delivery path examine or process carried information. In addition, this information needs to be processed in the forwarding plane, does not affect the forwarding delay of the packet, and does not increase the overhead of the control plane of the forwarding node.

Based on this, embodiments of the present disclosure propose an improved scheme for the packet extension header that needs to be processed hop by hop. This scheme not only implements the existing hop-by-hop processing function, but also meets the needs of new technologies such as slicing and in-situ flow information telemetry to examine or process information hop by hop in the forwarding plane.

The specific implementations of the present disclosure will be described below with reference to the accompanying drawings.

In the description process, the implementation of each node will be described respectively, and then an example of coordination of the nodes will be given to better understand the implementation of the solutions given in the embodiments of the present disclosure. This description does not mean that the nodes must implement together or separately. In fact, when the nodes implement separately, they also solve the problems at their own sides, and when they are used in combination, better technical effects will be obtained.

Fig. 2 is a schematic implementation flowchart of a packet sending method. As shown in the figure, the method may include:
a step 201: receiving a packet, where the packet is to be examined or processed by any node along a packet delivery path;
a step 202: carrying an identifier in an extension header of the packet, where the identifier indicates that information carried in the packet is processed in a control plane or a forwarding plane;
a step 203: sending the packet.

Fig. 3 is another schematic implementation flowchart of a packet sending method. As shown in the figure, the method may include:
a step 301: receiving a packet, where an identifier is carried in a packet extension header of the packet, and the identifier indicates that information carried in the packet is processed in a control plane or a forwarding plane;
a step 302: processing, according to the identifier, the packet in the control plane or the forwarding plane.

In some implementations, the packet is an IPv6 packet.

In specific implementation, the packet extension header is an IPv6 packet extension header such as a Hop-by-Hop Options Header.

In the implementation, IPv6 packets and the extension header Hop-by-Hop Options Header can be used as examples. Because IPv6 packets are widely used and representative, and the Hop-by-Hop Options Header has the characteristic that all network nodes in the packet delivery path examine or process the Hop-by-Hop Options Header, so it is used as an example. However, other packets and extension headers can also be used, as long as the packets meet the characteristic that they will be examined or processed by any node in the packet delivery path. IPv6 packets and the extension header Hop-by-Hop Options Header are only used to teach those skilled in the art how to implement the technical solution of the embodiments of the present disclosure, but do not mean that the technical solution of the embodiments of the present disclosure can only be applied to IPv6 packets and the extension header Hop-by-Hop Options Header. During the implementation process, the corresponding packets and extension headers can be determined according to the needs of practice.

The specific scheme can be: receiving an IPv6 packet; carrying an identifier in an IPv6 packet extension header Hop-by-Hop Options Header, where the identifier indicates that information carried in Hop-by-Hop Options Header is processed in a control plane or a forwarding plane; sending the IPv6 packet.

The receiving end: receiving the IPv6 packet, wherein the extension header Hop-by-Hop Options Header of the IPv6 packet carries the identifier, the identifier indicates that information carried in Hop-by-Hop Options Header is processed in a control plane or a forwarding plane; processing, according to the identifier, the packet in the control plane or the forwarding plane.

This scheme defines a new IPv6 extension header Hop-by-Hop Options Header. This extension header carries the identifier which indicates that information carried in Hop-by-Hop Options Header is processed in a control plane or a forwarding plane.

In some implementations, receiving the packet by the receiving node may further include:
enabling a CheckSum to be carried in the packet extension header.

Specifically, the CheckSum is carried in the IPv6 packet extension header Hop-by-Hop Options Header.

Correspondingly, for the node receiving the packet, the first CheckSum is carried in the IPv6 packet extension header Hop-by-Hop Options Header.

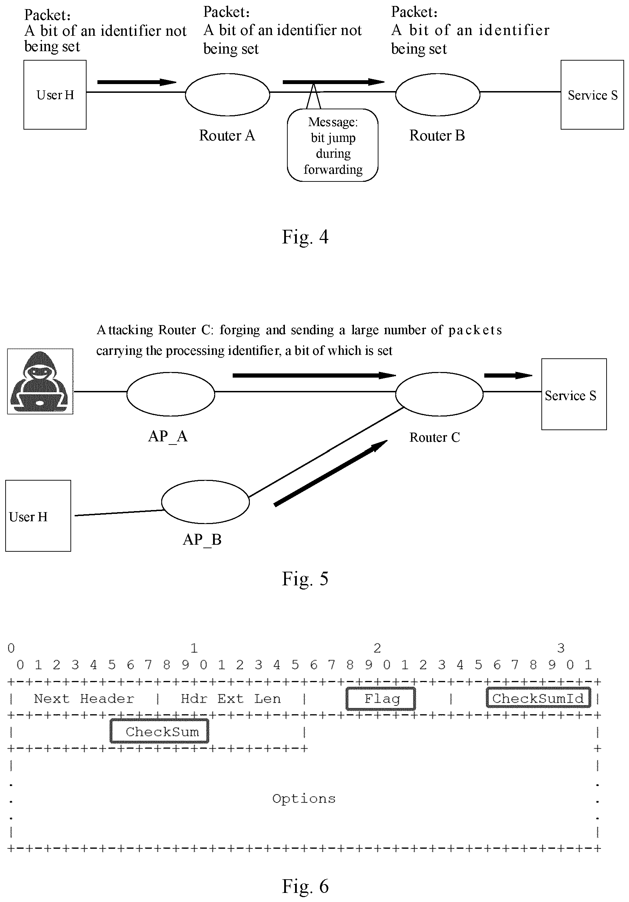

Fig. 4 is a schematic diagram of a bit jump process during a packet forwarding process. During the packet forwarding process, there may be problems as shown in Fig. 4. When Router A forwards user H's packet to Router B, due to some reasons, the bit jumps, causing the identifier to be incorrectly set. The packet that should be processed in the forwarding plane is erroneously sent up to the control plane. If there are many such packets, it will cause too much pressure in the control plane, causing the network node Router B to crash.

Fig. 5 is a schematic diagram of a process that an illegal network device sends a large number of forged packets including identifiers to attack a network device. If a hacker actively attacks network nodes, there may be problems as shown in Fig. 5. The illegal AP_A sends a large number of forged packets carrying identifiers to Router C, bits of the identifiers being set. After Router C receives the packets, all packets are sent up to the control plane for processing, causing Router C to be paralyzed, thereby affecting the normal user H's access to service S's legal packet forwarding and causing service damage.

In this way, by carrying CheckSum in the packet, the foregoing two problems can be avoided. On the one hand, the integrity of the packet can be verified to identify whether the integrity has changed during forwarding. On the other hand, the legality of the identity of the packet sender can be verified.

Correspondingly, in some implementations, for the node receiving the packet, the method may further include:
enabling the packet extension header to carry CheckSumId used to indicate an algorithm used by the CheckSum.

For the node receiving the packet, a CheckSumId is carried in the packet extension header and is used to indicate an algorithm used by the CheckSum.

Specifically, the CheckSumId is carried in the IPv6 packet extension header Hop-by-Hop Options Header and is used to indicate the algorithm used by the CheckSum.

For the node receiving the packet, a CheckSumId is carried in the IPv6 packet extension header Hop-by-Hop Options Header and is used to indicate an algorithm used by the CheckSum.

In specific implementation, the method further includes:
comparing a second CheckSum calculated according to the algorithm indicated by the CheckSumId with the first CheckSum carried in the packet, to determine whether the packet is a legal packet.

The following will be explained with examples.

First, the implementation of the packet format is explained.

Fig. 6 is a schematic diagram of a Hop-by-Hop Options Header packet format, which includes:
Next Header: an extension header type after the Hop-by-Hop Options Header;
Hdr Ext Len: a length of an extension header;
Flag: identifying whether the packet needs to be processed in the control plane or the forwarding plane; for example, if Flag is set to 1, the packet is processed in the control plane; if Flag is set to 0, the packet is processed in the forwarding plane;
CheckSumId (checksum identifier): an index of the CheckSum calculation method;
CheckSum: the CheckSum calculated according to the method indicated by the CheckSumId;
Options: any number of Options are carried; the definition of Option can at least refer to Section 4.2 of [RFC8200] (RFC: Request For Comments, which is a series of memos published by the Internet Engineering Task Group (IETF)).

Next, the implementation of CheckSum calculation is explained.

Network devices pre-configure the CheckSum calculation method corresponding to the CheckSumId, the methods includes a CheckSum algorithm, a CheckSum calculation content, etc. For example, the CheckSum algorithm can be set to: parity check, LRC (Longitudinal Redundancy Check), etc. The CheckSum calculation content can be set to: calculate the Hop-by-Hop Options Header part, excluding the variable part; calculate the entire IPv6 packet header, excluding the variable part; calculate the Hop-by-Hop Options Header part, including the variable part, etc.

In some implementations, the method may further include:
updating the algorithm of the CheckSum at a preset time.

Specifically, network devices can support the configuration of multiple CheckSumIds, corresponding to various different CheckSum calculation methods, and network devices periodically change the CheckSumId. Even if a hacker eavesdrops on network packets, they cannot know the algorithm corresponding to the CheckSumId and the CheckSum calculation content, so it is difficult to forge legal packets. At the same time, the periodic change of the CheckSumId by network devices further increases the difficulty for hackers to crack the content of the CheckSumId.

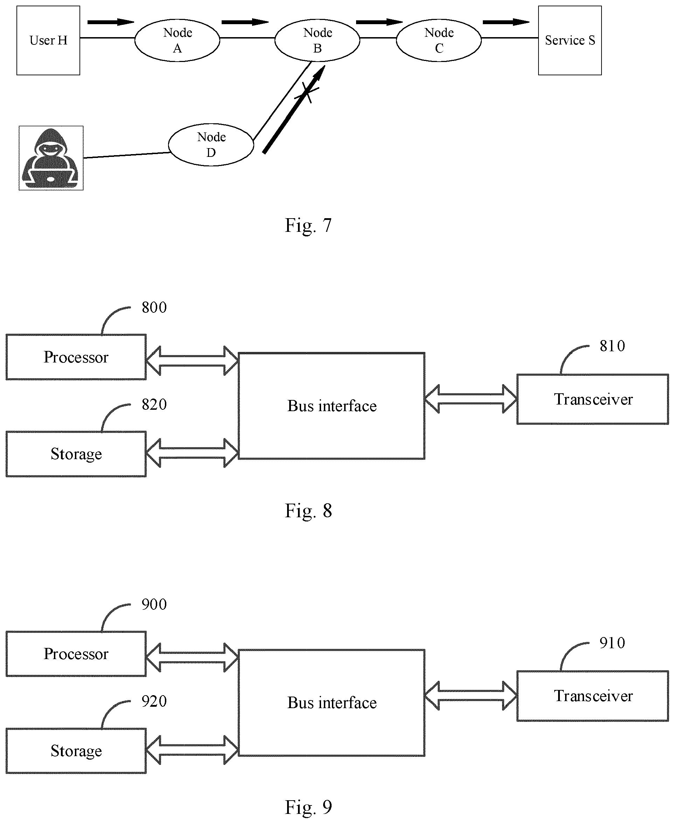

The following explains the implementation of packet processing. Fig. 7 is a schematic implementation flowchart of IPv6 packet processing, which may include:
1. Node A receives User H's packet, encapsulates the Hop-by-Hop Options Header, the packet carries the information for hop-by-hop detection and processing, and if the information needs to send up for processing at the control plane, the Flag is set to 1, otherwise the Flag is set to 0.
2. Node A matches the corresponding CheckSumId for User H's packet according to the locally configured CheckSum information, calculates the CheckSum according to the method indicated by the CheckSumId, and enables the CheckSumId and CheckSum information to be carried in the Hop-by-Hop Options Header.
3. Node B receives User H's packet forwarded by Node A, obtains the local CheckSum calculation method according to the CheckSumId in the Hop-by-Hop Options Header, and calculates the CheckSum' of the packet. CheckSum' is compared with the CheckSum carried in the packet:
   if the CheckSum' and the CheckSum are the same, the packet is a legal packet and is processed in the control plane or the forwarding plane according to the indication of the Flag; otherwise, the packet is illegal and is processed according to the administrator's configuration, such as discarding the packet, etc.
   for example, if an illegal node D sends a forged packet, because the illegal node D does not know the CheckSum calculation method, the illegal node D cannot calculate a legal CheckSum; after Node B receives the illegal packet, Node B calculates the CheckSum', which is inconsistent with the CheckSum carried in the packet, and discards the illegal packet, thereby avoiding being attacked by hackers.
5. if the CheckSum calculation content contains a variable part, after Node B updates the variable part, Node B recalculates the CheckSum2 according to the CheckSum calculation method indicated by the CheckSumId, and uses CheckSum2 to update the CheckSum in the packet. That is, in some implementations, the method may further include:
   if the CheckSum calculation content contains a variable part, then after updating the variable part, recalculating the third CheckSum according to the CheckSum calculation method indicated by the CheckSumId, and using the third CheckSum to update the first CheckSum in the packet;
6. After Node C receives User H's packet, the packet processing process is the same as Node B.

Based on the same inventive concept, embodiments of the present disclosure also provide a network node and a computer-readable storage medium. Since the principles of these devices to solve problems are similar to the packet sending method, the implementation of these devices can refer to the implementation of the method, and the repetitive parts will not be repeated.

When implementing the technical solution provided by embodiments of the present disclosure, the technical solution may be implemented in the following ways.

Fig. 8 is a schematic structural diagram of a first network node. As shown in the figure, the node includes:
a processor 800, configured to read a program in a storage 820 and perform following processes:
receiving a packet, where the packet is to be examined or processed by any node along a packet delivery path;
enabling a packet extension header to carry an identifier, where the identifier indicates that information carried in the packet is processed in a control plane or a forwarding plane;
sending the packet;
a transceiver 810, configured to receive and send data under the control of the processor 800.

In some implementations, the packet is an IPv6 packet.

In some implementations, the packet extension header is an IPv6 packet extension header Hop-by-Hop Options Header.

In some implementations, the processor 800 is further configured to read a program in the storage and perform further:
enabling a CheckSum to be carried in the packet extension header.

In some implementations, the processor 800 is further configured to read a program in the storage and perform further:
enabling a CheckSumId to be carried in the packet extension header, the CheckSum ID being used to indicate an algorithm used by the CheckSum.

In some implementations, the processor 800 is further configured to read a program in the storage and perform further:
updating the algorithm of the CheckSum at a preset time.

In Fig. 8, a bus architecture may include any number of interconnected buses and bridges, specifically various circuits such as one or more processors represented by the processor 800 and a memory represented by the storage 820 are linked together. The bus architecture may also link together various other circuits, such as peripheral devices, voltage regulators, and power management circuits, which are well known in the art, and thus will not be described further herein. The bus interface provides an interface. The transceiver 810 may be a plurality of elements, i.e., including a transmitter and a receiver, for providing elements for communicating with various other devices over a transmission medium. The processor 800 is responsible for managing the bus architecture and general processing, and the storage 820 may store data used by the processor 800 when performing operations.

An embodiment of the present disclosure further provides a first network node, including:
a first node receiving module, configured to receive a packet, where the packet is to be examined or processed by any node along a packet delivery path;
a first node identifying module, configured to enable an identifier to be carried in a packet extension header, where the identifier indicates that information carried in the packet is processed in a control plane or a forwarding plane;
a first node sending module, configured to send the packet.

In some implementations, the packet is an IPv6 packet.

In some implementations, the packet extension header is an IPv6 packet extension header Hop-by-Hop Options Header.

In some implementations, the first node identifying module is further configured to enable a CheckSum to be carried in the packet extension header.

In some implementations, the first node identifying module is further configured to enable a CheckSumId to be carried in the packet extension header, the CheckSumID being used to indicate an algorithm used by the CheckSum.

In some implementations, the first node identifying module is further configured to update the algorithm of the CheckSum at a preset time.

For the convenience of description, various parts of the device described above are described by dividing functions into various modules or units respectively. Of course, when implementing the present disclosure, the functions of the modules or units can be implemented in one or more of software or hardware.

Fig. 9 is a schematic structural diagram of a second network node. As shown in the figure, the node includes:
a processor 900, configured to read a program in a storage 920 and perform following processes:
receiving a packet, where an identifier is carried in a packet extension header of the packet, and the identifier indicates that information carried in the packet is processed in a control plane or a forwarding plane;
processing, according to the identifier, the packet in the control plane or the forwarding plane;
a transceiver 910, configured to receive and send data under the control of the processor 900.

In some implementations, the packet is an IPv6 packet.

In some implementations, the packet extension header is an IPv6 packet extension header Hop-by-Hop Options Header.

In some implementations, the processor is further configured to read the program in the storage and perform following:
enabling a first CheckSum to be carried in the packet extension header.

In some implementations, the processor is further configured to read the program in the storage and perform following:
enabling a CheckSumId to be carried in the packet extension header, the CheckSumID being used to indicate an algorithm used by the CheckSum.

In some implementations, the processor is further configured to read the program in the storage and perform following:
comparing a second CheckSum calculated according to the algorithm indicated by the CheckSumId with the first CheckSum carried in the packet, to determine whether the packet is a legal packet.

In some implementations, the processor is further configured to read the program in the storage and perform following:
if calculation content of the CheckSum includes a variable part, then after updating the variable part, recalculating a third CheckSum according to a CheckSum calculation method indicated by the CheckSumId, and updating the first CheckSum in the packet with the third CheckSum.

In some implementations, the processor is further configured to read the program in the storage and perform following:
updating the algorithm of the CheckSum at a preset time.

In Fig. 9, a bus architecture may include any number of interconnected buses and bridges, specifically various circuits such as one or more processors represented by the processor 900 and a memory represented by the storage 920 are linked together. The bus architecture may also link together various other circuits, such as peripheral devices, voltage regulators, and power management circuits, which are well known in the art, and thus will not be described further herein. The bus interface provides an interface. The transceiver 910 may be a plurality of elements, i.e., including a transmitter and a receiver, for providing elements for communicating with various other devices over a transmission medium. The processor 900 is responsible for managing the bus architecture and general processing, and the storage 920 may store data used by the processor 900 when performing operations.

An embodiment of the present disclosure provides a second network node, including:
a second node receiving module, configured to receive a packet, where an identifier is carried in a packet extension header of the packet, and the identifier indicates that information carried in the packet is processed in a control plane or a forwarding plane;
a second node sending module, configured to process, according to the identifier, the packet in the control plane or the forwarding plane.

In some implementations, the packet is an IPv6 packet.

In some implementations, the packet extension header is an IPv6 packet extension header Hop-by-Hop Options Header.

In some implementations, the second node receiving module is further configured to receive the packet carrying a first CheckSum in the packet extension header.

In some implementations, the second node receiving module is further configured to receive the CheckSumId carried in the packet extension header, the CheckSumID indicates an algorithm used by the CheckSum.

In some implementations, the second node receiving module is further configured to compare a second CheckSum calculated according to the algorithm indicated by the CheckSumId with the first CheckSum carried in the packet, to determine whether the packet is a legal packet.

In some implementations, if calculation content of the CheckSum includes a variable part, after updating the variable part, the second node receiving module is further configured to recalculate a third CheckSum according to a CheckSum calculation method indicated by the CheckSumId, and update the first CheckSum in the packet with the third CheckSum.

In some implementations, the second node receiving module is further configured to update the algorithm of the CheckSum at a preset time.

For the convenience of description, various parts of the device described above are described by dividing functions into various modules or units respectively. Of course, when implementing the present disclosure, the functions of the modules or units can be implemented in one or more of software or hardware.

An embodiment of the present disclosure provides a computer-readable storage medium, where the computer-readable storage medium stores a computer program for executing the foregoing packet sending method.

The specific implementation can refer to the implementation of the packet sending method on each node.

In summary, the technical solution provided by the embodiments of the present disclosure proposes a new packet extension header. All network nodes in the delivery path must examine or process the information carried in this extension header and decides whether to process the information carried in the extension header in the control plane or the forwarding plane according to the identifier.

Compared with the Hop-by-Hop Options Header in the related art, on the basis of supporting the existing Hop-by-Hop Options Header function, support for the ability to process packet information hop-by-hop in the forwarding plane is added, which can better meet the needs of new technologies such as slicing and in-situ flow information telemetry. The existing Hop-by-Hop Options Header cannot meet the needs of new technologies such as slicing and in-situ flow information telemetry.

Furthermore, a CheckSum calculation method is proposed. On the one hand, the integrity of the packet can be verified, whether the content has changed during forwarding can be identified. On the other hand, the legality of the identity of the packet sender can be verified. The periodic replacement of CheckSumId further increases the difficulty of hacker attacks.

The flexible and variable CheckSum calculation method, while enable the existing CheckSum to ensure the integrity of the packet, also supports the verification of the legality of the identity of the packet sender. The CheckSum calculation method can effectively identify illegal packets forged by hackers and effectively prevent the identifier from being tampered with or used by hackers to attack network nodes.

Those skilled in the art should understand that the embodiments of the present disclosure may be provided as methods, systems, or computer program products. Accordingly, the present disclosure can take the form of an entire hardware embodiment, an entire software embodiment, or an embodiment combining software and hardware aspects. Furthermore, the present disclosure may take the form of a computer program product embodied on one or more computer-usable storage media (including but not limited to magnetic disk storage, optical storage, etc.) having computer-usable program code embodied therein.

The present disclosure is described with reference to flowcharts and/or block diagrams of methods, apparatus (systems), and computer program products according to embodiments of the present disclosure. It should be understood that each step in the flowchart and/or each block in the block diagram, and combinations of steps in the flowchart and/or blocks in the block diagram can be realized by computer program instructions. These computer program instructions may be provided to a general purpose computer, special purpose computer, embedded processor, or a processor of other programmable data processing equipment to produce a machine such that the instructions executed by the processor of the computer or other programmable data processing equipment produce a means for realizing the functions specified in one or more steps of the flowchart and/or one or more blocks of the block diagram.

These computer program instructions may also be stored in a computer-readable memory capable of directing a computer or other programmable data processing apparatus to operate in a specific manner, such that the instructions stored in the computer-readable memory produce an article of manufacture including instruction means, the instructions means realizes the function specified in one or more steps of the flowchart and/or one or more blocks of the block diagram.

These computer program instructions can also be loaded onto a computer or other programmable data processing device, causing a series of operational steps to be performed on the computer or other programmable device to produce a computer-implemented process, thereby instructions implemented by a computer or other programmable device provide steps for implementing the functions specified in the flow of the flow chart and/or one or more blocks in the block diagram.

Obviously, those skilled in the art can make various changes and modifications to the present disclosure without departing from the spirit and scope of the present disclosure. Thus, if these modifications and variations of the present disclosure fall within the scope and equivalent technologies of the claims of the present disclosure, the present disclosure also intends to include these changes and modifications.

## Claims

1. A packet sending method, comprising:
receiving a packet, wherein the packet is to be examined or processed by any node along a packet delivery path;
enabling an identifier to be carried in a packet extension header of the packet, wherein the identifier indicates that information carried in the packet is processed in a control plane or a forwarding plane;
sending the packet.

2. The method according to claim 1, wherein the packet is an Internet Protocol version 6 (IPv6) packet.

3. The method according to claim 2, wherein the packet extension header is an IPv6 packet extension header Hop-by-Hop Options Header.

4. The method according to any one of claims 1 to 3, further comprising:
enabling a CheckSum to be carried in the packet extension header.

5. The method according to claim 4, further comprising:
enabling a CheckSumId to be carried in the packet extension header, the CheckSumId indicating an algorithm used by the CheckSum.

6. The method according to claim 5, further comprising:
updating the algorithm of the CheckSum at a preset time.

7. A packet sending method, comprising:
receiving a packet, wherein the packet carries an identifier in a packet extension header of the packet, and the identifier indicates that information carried in the packet is processed in a control plane or a forwarding plane;
processing, according to the identifier, the packet in the control plane or the forwarding plane.

8. The method according to claim 7, wherein the packet is an IPv6 packet.

9. The method according to claim 8, wherein the packet extension header is an IPv6 packet extension header Hop-by-Hop Options Header.

10. The method according to any one of claims 7 to 9, further comprising:
enabling a first CheckSum to be carried in the packet extension header.

11. The method according to claim 10, further comprising:
enabling a CheckSumId to be carried in the packet extension header, the CheckSumId indicating an algorithm used by the CheckSum.

12. The method according to claim 11, further comprising:
comparing, with the first CheckSum carried in the packet, a second CheckSum calculated according to the algorithm indicated by the CheckSumId, to determine whether the packet is a legal packet.

13. The method according to claim 12, further comprising:
if calculation content of the CheckSum comprises a variable part, then after updating the variable part, recalculating a third CheckSum according to a CheckSum calculation method indicated by the CheckSumId, and updating the first CheckSum in the packet with the third CheckSum.

14. The method according to claim 11, further comprising:
updating the algorithm of the CheckSum at a preset time.

15. A first network node, comprising:
a processor, configured to read a program in a storage and perform following processes:
receiving a packet, wherein the packet is to be examined or processed by any node along a packet delivery path;
enabling an identifier to be carried in a packet extension header of the packet, wherein the identifier indicates that information carried in the packet is processed in a control plane or a forwarding plane;
sending the packet;
a transceiver, configured to receive and send data under the control of the processor.

16. A first network node, comprising:
a first node receiving module, configured to receive a packet, wherein the packet is to be examined or processed by any node along a packet delivery path;
a first node identifying module, configured to enable an identifier to be carried in a packet extension header of the packet, wherein the identifier indicates that information carried in the packet is processed in a control plane or a forwarding plane;
a first node sending module, configured to send the packet.

17. A second network node, comprising:
a processor, configured to read a program in a storage and perform following processes:
receiving a packet, wherein the packet carries an identifier in a packet extension header of the packet, and the identifier indicates that information carried in the packet is processed in a control plane or a forwarding plane;
processing, according to the identifier, the packet in the control plane or the forwarding plane;
a transceiver, configured to receive and send data under the control of the processor.

18. A second network node, comprising:
a second node receiving module, configured to receive a packet, wherein the packet carries an identifier in a packet extension header of the packet, and the identifier indicates that information carried in the packet is processed in a control plane or a forwarding plane;
a second node sending module, configured to process, according to the identifier, the packet in the control plane or the forwarding plane.

19. A computer-readable storage medium, wherein the computer-readable storage medium stores a computer program, the computer program being used for executing the method according to any one of claims 1 to 14.
